# EUROPÄISCHE PATENTSCHRIFT

(11) **EP 2 647 514 B1**
(45) Veröffentlichungstag und Bekanntmachung des Hinweises auf die Patenterteilung: **06.09.2017**
(21) Anmeldenummer: 13161369.7
(22) Anmeldetag: 27.03.2013
(51) Int. Cl.: B60J 7/12, F16C 11/04

(54) **Gelenkeinrichtung zwischen Lenkern eines Gestänges eines Faltverdecks**
Joint between rods of a folding roof system
Dispositif d'articulation entre des bielles d'un système de toit escamotable

(30) Priorität: 03.04.2012 DE 202012101208 U
(43) Veröffentlichungstag der Anmeldung: 09.10.2013
(73) Patentinhaber: Magna Car Top Systems GmbH, 74321 Bietigheim-Bissingen (DE)
(72) Erfinder: Sczuka, Markus, 70437 Stuttgart (DE); Wohlfahrth, Michael, 67165 Waldsee (DE); Zehnder, Frank, 71282 Hemmingen (DE)
(74) Vertreter: Rausch, Gabriele

(56) Entgegenhaltungen:
- EP-A2- 0 106 693
- DE-A1- 10 319 795
- DE-A1-102009 031 050

## Beschreibung

Die Erfindung bezieht sich auf eine Gelenkeinrichtung zwischen Lenkern eines Gestänges eines Faltverdecks für einen Personenkraftwagen, nach dem Oberbegriff des Patentanspruchs 1.

Aus DE 199 41 087 C2 ist eine Gelenkverbindung für ein bewegliches Fahrzeugdach bekannt. Diese Gelenkverbindung ist mit einem ersten Lagerabschnitt und einem zweiten Lagerabschnitt versehen, die über einen durch einen Niet dargestellten Lagerbolzen zusammengehalten werden. Zur Herabsetzung der Reibung in der Gelenkverbindung sind Gelenkteile von letzterer mit einer reibungsarmen Oberflächenbeschichtung aus Aluminiumoxid versehen.

Die DE 295 16 619 U1 befasst sich mit einem Scharnier für die gelenkige Verbindung zweier Arme -erster Arm und zweiter Arm- eines Faltgestänges zur Aufnahme eines flexiblen Dachs eines Cabrios. Das Scharnier umfasst einen Gelenkzapfen, der in zwei miteinander fluchtenden Bohrungen der beiden Arme eingesetzt ist. Der Gelenkzapfen ist drehfest in der Bohrung des ersten Arms angeordnet und drehbar gegenüber dem zweiten Arm ausgeführt. Dabei ist eine den Gelenkzapfen umgebende Buchse vorgesehen, die aus einem Flüssigkeitskristall-Polymergrundmaterial besteht. Die Buchse ist in eine Bohrung eines metallischen Lagers eingesetzt, das einen Kragen aufweist. Der Kragen wirkt als Distanzscheibe zwischen den Armen.

Aus der US 3,328,072 geht ein Faltverdeck für ein Kraftfahrzeug hervor, welches Faltdach ein Verdeckgestänge aufweist. Das Verdeckgestänge umfasst einen Steuerlenker, einen Querspriegel und einen Hauptlenker, die an einem gemeinsamen Lager zusammengesetzt sind. Der Hauptlenker ist -in Fahrzeugquerrichtung gesehen- mit zwei nebeneinander liegenden, jedoch beabstandeten Lenkerelementen versehen, zwischen die der Steuerlenker mit einem Lagerabschnitt eingebaut ist. Ein Niet verbindet Steuerlenker, Querspriegel und Hauptlenker, wobei in die Bohrung des Steuerlenkers eine Buchse aus nachgiebigem Werkstoff eingesetzt ist, an der zwei Distanzkrägen vorgesehen sind. Sie bewirken einen definierten Abstand zwischen dem Steuerlenker und den Lenkerelementen des Hauptlenkers.

Eine Gelenkeinrichtung der gattungsgemäßen Art ist auch aus der DE 10 2009 031 050 A1 bekannt. Bei diesem System werden mittels einer Nieteinrichtung Lenker eines Gestänges eines Faltverdecks zusammengehalten. Zwischen Nietschaft eines Niets und ersten und zweiten Lagerbohrungen erstreckt sich eine Lagerhülse, die mit einem ersten kragenartigen Anschlag an einer ersten Stirnseite des ersten Lenkers anliegt. Ein zweiter kreisringförmiger Anschlag ist beabstandet zum ersten Anschlag an der Lagerhülse vorgesehen. Die Lagerbohrungen der Lenker weisen unterschiedliche Durchmesser auf. Entsprechend sind auch Lagerhülsenabschnitte eines Nietschafts ausgeführt. Zwischen den Lagerhülsenabschnitten sind erste und zweite Lagerbuchsen vorgesehen. Die zweite Lagerbuchse weist einen ersten und zweiten radialen Kragen auf und wird dadurch gebildet, dass er zunächst eine zylindrische Form besitzt und dann durch axiale Bewegung des ersten kragenartigen Anschlags der Lagerhülse in eine radiale Form verbracht wird.

Es ist Aufgabe der Erfindung, eine Gelenkeinrichtung zwischen Lenkern eines Gestänges eines Faltverdecks für einen Personenkraftwagen anzugeben, welche Gelenkeinrichtung sich durch verbesserte Funktion, d.h. Leichtgängigkeit und sichere Verbindung sowie einfachere Montage und erhöhte Kraftaufnahme, auszeichnet.
Nach der Erfindung wird diese Aufgabe durch die Merkmale des Patentanspruchs 1 gelöst. Die Gelenkeinrichtung umfasst einen Blindniet und einen Bohrungen der Lenker durchdringenden Nietschaft, sowie einen ersten Lenker mit einem im wesentlichen zylindrischen Lagerstutzen der eine Bohrung aufweist, und der sich durch eine Lagerbohrung eines zweiten Lenkers erstreckt, wobei der Blindniet mit einem zylindrischen Kragen einer Niethülse über zumindest eine Sicherungsscheibe an einem Anschlag des zweiten Lenkers anliegt, und ein Dornkopf des Blindniets an einen Schaftanschlag in der Bohrung des Lagerstutzens herangeführt ist.
Vorzugsweise sind die Lenker als Gussteile ausgeführt und der Lagerbolzen ist in einem Guss mit einem der Lenker hergestellt.
Die mit der Erfindung hauptsächlich erzielten Vorteile sind darin zu sehen, dass die Gelenkeinrichtung für die Lenker des Gestänges des Faltverdecks dank des Niets und der Lagerbuchse mit den Anschlägen sich musterhaft, d.h. auch klapperfrei, bewegen lässt. Dabei ist aber die hohe Kraftaufnahme und Lebensdauer wie auch einfache konstruktive Umsetzung der Gelenkeinrichtung hervorzuheben. Der Einsatz des Blindniets für die Nietverbindung trägt zur einfachen Montage und definierten Bildung der Aufweitung als Schaftanschlag bei.
Lagerbuchsen in der Lagerbohrung unterstützen die Leichtgängigkeit der Lenker der Gelenkeinrichtung, und sie stellen darüber hinaus kostengünstige Bauteile dar. In einer bevorzugten Ausführungsform der Erfindung weisen die beiden Lagerbuchsen im Wesentlichen die gleichen Dimensionen auf.

Schließlich bestehen die Lagerbuchsen aus Kunststoff, Metall oder dgl. bzw. einem anderen geeigneten Werkstoff mit entsprechenden Lagercharakteristika.

Die Erfindung wird im Folgenden beispielhaft unter Bezugnahme auf die Zeichnungen beschrieben.
- Fig. 1: ist eine Teilschrägansicht von hinten links auf einen Personenkraftwagen mit Gelenkeinrichtungen eines Gestänges für ein Faltverdeck eines Personenkraftwagens nach der Erfindung.
- Fig. 2: ist eine Schrägansicht einer Gelenkeinrichtung des Gestänges gemäß Fig. 1.
- Fig. 3: zeigt schematisch einen Schnitt nach der Linie V-V der Fig. 2 der Gelenkeinrichtung in größerem Maßstab.

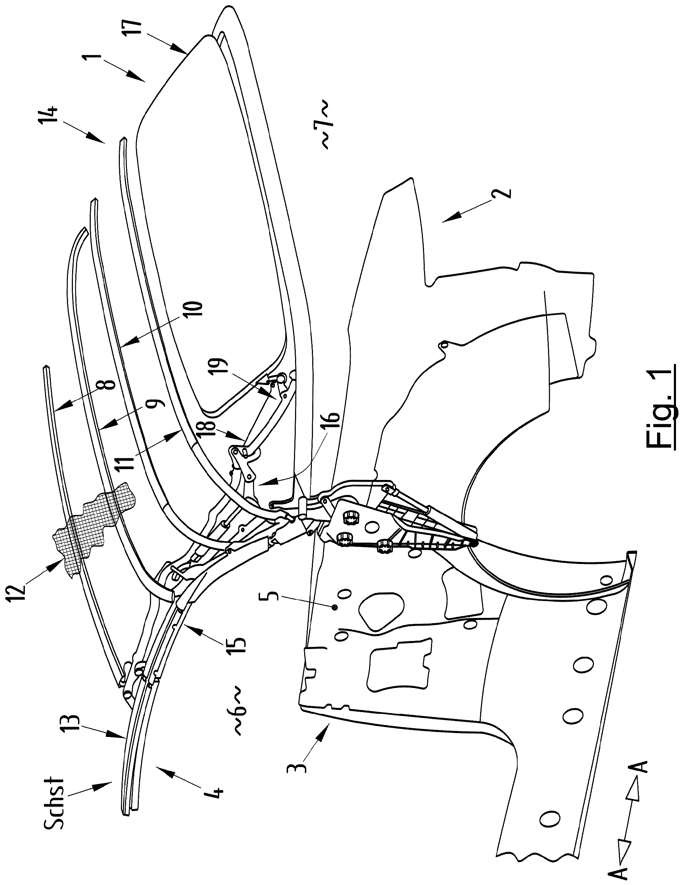

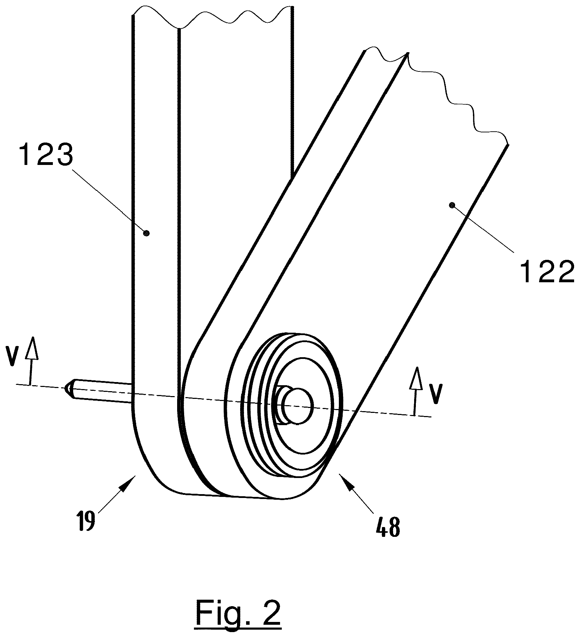

Entsprechend Fig. 1 weist ein Personenkraftwagen 1 einen Aufbau 2 mit einem Grundkörper 3 und einem Faltverdeck 4 auf. Der eine Wandstruktur 5, bspw. aus Metallblech, besitzende Grundkörper 3 trägt das Faltverdeck 4, das zusammenlegbar und von einer einen Fahrgastraum 6 umspannenden Schließstellung Schst in eine in einem Aufbewahrungsraum 7 abgesenkte Offenstellung - nicht gezeigt - bewegbar ist. Das Dach 4 ist mit quer zur Fahrzeuglängsrichtung A-A verlaufenden Spriegeln 8, 9, 10 und 11 versehen, die zumindest in der Schließstellung Schst des Dachs 4 einen Verdeckbezug 12 stützen und mit an Längsseiten 13 und 14 des besagten Daches 4 verlaufenden Lenkersystemen 15 eines Gestänges 16 zusammenwirken. Der Spriegel 11 begrenzt einen oberen Rand einer Heckscheibe 17. Das Gestänge 16 umfasst ein oder mehrere Gelenkeinrichtungen, z.B. 18 und 19, die relativbewegliche erste und zweite Lenker 122 und 123 aufweisen (Fig. 2).

In Fig. 2 sind die ersten und die zweiten Lenker 122 und 123 der Gelenkeinrichtung 19 dargestellt, die unter Vermittlung einer Nieteinrichtung 48 in Lage gehalten werden.

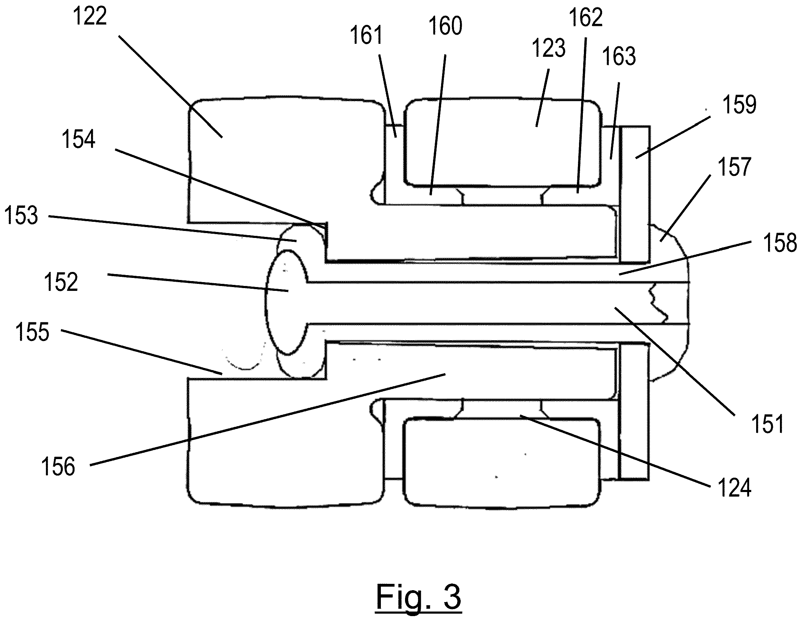

Fig. 3 zeigt schematisch einen Schnitt nach der Linie V-V der Fig. 2 der erfindungsgemäßen Gelenkeinrichtung in größerem Maßstab. Die Nieteinrichtung 48 besitzt einen Blindniet 151, der einen als Niethülse 158 ausgebildeten Nietschaft und einen Dorn mit einem Dornkopf 152 umfasst. Ein erster Lenker 122 weist einen im wesentlichen zylindrischen Lagerstutzen 156 mit einer Bohrung auf, wobei sich der Lagerstutzen durch eine Lagerbohrung 124 eines zweiten Lenkers 123 erstreckt und der Blindniet 151 mit einem zylindrischen Kragen 157 einer Niethülse 158 über eine Sicherungsscheibe 159 an einem Anschlag des zweiten Lenkers 123 anliegt. Der Dornkopf 152 des Blindniets ist an einen Schaftanschlag 154 in der Bohrung 155 des Lagerstutzens 156 herangeführt, wobei der Dornkopf sich über eine radiale Aufweitung 153 der Niethülse 158 am Schaftanschlag 154 in einer abgestuften Bohrung 155 des Lagerstutzens 156 abstützt.

Vorzugsweise sind die Sicherungsscheibe 159, der Lagerstutzen und der Schaftanschlag 154 in der Bohrung des Lagerstutzens 156 in der Weise ausgebildet, dass der erste Lenker 122 und der zweite Lenker 123 gezielt relativbeweglich zueinander verstellbar sind.

In einer bevorzugten Ausführung der Erfindung sind zwischen dem Lagerstutzen 156 des ersten Lenkers 122 und der Lagerbohrung 124 des zweiten Lenkers 123 erste und zweite Lagerbuchsen 160 und 162 vorgesehen, wobei die erste Lagerbuchse 160 einen radialen Kragen 161 besitzt, der zwischen erstem Lenker 122 und zweitem Lenker 123 vorgesehen ist, und die zweite Lagerbuchse 162 einen radialen Kragen 163 besitzt, der zwischen zweitem Lenker 123 und der Sicherungsscheibe 159 des Blindniets 151 vorgesehen ist.

### Bezugszeichenliste

- 1: Personenkraftwagen
- 2: Aufbau
- 3: Grundkörper
- 4: Faltverdeck, Dach
- 5: Wandstruktur
- 6: Fahrgastraum
- 7: Aufbewahrungsraum
- 8,9,10,11: Spriegel
- 12: Verdeckbezug
- 13,14: Längsseiten des Daches
- 15: Lenkersystem
- 16: Gestänge
- 17: Heckscheibe
- 18,19: Gelenkeinrichtungen
- 48: Nieteinrichtung
- 122,123: Lenker
- 124: Lagerbohrung
- 151: Blindniet
- 152: Dornkopf eines Blindniets
- 153: radiale Aufweitung einer Niethülse
- 154: Schaftanschlag
- 155: Bohrung eines Lagerstutzens
- 156: Lagerstutzen
- 157: Kragen
- 158: Niethülse
- 159: Sicherungsscheibe
- 160: Lagerbuchse
- 161: radialer Kragen einer Lagerbuchse
- 162: Lagerbuchse
- 163: radialer Kragen einer Lagerbuchse

## Patentansprüche

1. Gelenkeinrichtung zwischen Lenkern eines Gestänges eines Faltverdecks für einen Personenkraftwagen, das von einer einen Fahrgastraum überspannenden Schließstellung in eine in einem Heckraum abgelegte Offenstellung verstellbar ist und vice versa, wobei die Lenker mittels einer Nieteinrichtung in Lage gehalten werden, die einen Blindniet (151) und einen Bohrungen der Lenker durchdringenden Nietschaft umfasst,
**dadurch gekennzeichnet, dass**
ein erster Lenker (122) einen im wesentlichen zylindrischen Lagerstutzen (156) mit einer Bohrung aufweist, wobei sich der Lagerstutzen durch eine Lagerbohrung (124) eines zweiten Lenkers (123) erstreckt, wobei der Blindniet (151) mit einem zylindrischen Kragen (157) einer Niethülse (158) über zumindest eine Sicherungsscheibe (159) an einem Anschlag des zweiten Lenkers anliegt, und wobei ein Dornkopf (152) des Blindniets an einen Schaftanschlag (154) in der Bohrung (155) des Lagerstutzens (156) herangeführt ist.

2. Gelenkeinrichtung nach Anspruch 1,
**dadurch gekennzeichnet, dass** der erste Lenker (122) als Gussteil ausgeführt ist und der Lagerstutzen (156) in einem Guss mit dem Lenker (122) hergestellt ist.

3. Gelenkeinrichtung nach den Ansprüchen 1 oder 2,
**dadurch gekennzeichnet, dass**
der Dornkopf (152) des Blindniets sich über eine radiale Aufweitung (153) einer Niethülse (158) am Schaftanschlag (154) in einer abgestuften Bohrung (155) des Lagerstutzens (156) abstützt.

4. Gelenkeinrichtung nach einem oder mehreren der vorangehenden Ansprüche,
**dadurch gekennzeichnet, dass**
die Sicherungsscheibe (159), der Lagerstutzen und der Schaftanschlag (154) in der Bohrung des Lagerstutzens (156) in der Weise ausgebildet sind, dass der erste Lenker (122) und der zweite Lenker (123) gezielt relativbeweglich zueinander verstellbar sind.

5. Gelenkeinrichtung nach einem oder mehreren der vorangehenden Ansprüche,
**dadurch gekennzeichnet, dass**
zwischen dem Lagerstutzen (156) des ersten Lenkers und der Lagerbohrung (124) des zweiten Lenkers (123) erste und zweite Lagerbuchsen (160 und 162) vorgesehen sind.

6. Gelenkeinrichtung nach Anspruch 5,
**dadurch gekennzeichnet, dass**
die erste Lagerbuchse (160) einen radialen Kragen (161) besitzt, der zwischen erstem Lenker (122) und zweitem Lenker (123) vorgesehen ist.

7. Gelenkeinrichtung nach Anspruch 5 oder 6,
**dadurch gekennzeichnet, dass**
die zweite Lagerbuchse (162) einen radialen Kragen (163) besitzt, der zwischen zweitem Lenker (123) und der Sicherungsscheibe (159) des Blindniets (151) vorgesehen ist.

8. Gelenkeinrichtung nach einem der Ansprüche 5 bis 7,
**dadurch gekennzeichnet, dass**
die Lagerbuchsen (160 und 162) im Wesentlichen die gleichen Dimensionen aufweisen.

9. Gelenkeinrichtung nach einem oder mehreren der Ansprüche 5 bis 8,
**dadurch gekennzeichnet, dass**
die Lagerbuchsen (160 und 162) aus Kunststoff, Metall oder dergleichen hergestellt sind.

## Claims

1. Articulation device between arms of a rod assembly of a folding roof for a passenger vehicle, which roof can be adjusted from a closed position which spans a passenger compartment into an open position put down in a rear space, and vice versa, the arms being held in position by means of a rivet device which comprises a blind rivet (151) and a rivet shaft which extends through holes of the arms,
**characterised in that**
a first arm (122) has a substantially cylindrical bearing connection piece (156) having a hole, the bearing connection piece extending through a bearing hole (124) of a second arm (123), the blind rivet (151) being in abutment against a stop of the second arm by means of a cylindrical collar (157) of a rivet sleeve (158) by means of at least one securing disc (159), and a gudgeon head (152) of the blind rivet being moved towards a shaft stop (154) in the hole (155) of the bearing connection piece (156).

2. Articulation device according to Claim 1,
**characterised in that**
the first arm (122) is constructed as a cast component and the bearing connection piece (156) is produced in a single casting operation with the arm (122).

3. Articulation device according to Claim 1 or Claim 2,
**characterised in that**
the gudgeon head (152) of the blind rivet is supported on the shaft stop (154) in a stepped hole (155) of the bearing connection piece (156) by means of a radial expansion (153) of a rivet sleeve (158).

4. Articulation device according to one or more of the preceding claims,
**characterised in that**
the securing disc (159), the bearing connection piece and the shaft stop (154) are constructed in the hole of the bearing connection piece (156) in such a manner that the first arm (122) and the second arm (123) can be adjusted relative to each other in a selective manner with relative movement.

5. Articulation device according to one or more of the preceding claims,
**characterised in that**
first and second bearing bushes (160 and 162) are provided between the bearing connection piece (156) of the first arm and the bearing hole (124) of the second arm (123).

6. Articulation device according to Claim 5,
**characterised in that**
the first bearing bush (160) has a radial collar (161) which is provided between the first arm (122) and the second arm (123).

7. Articulation device according to Claim 5 or 6,
**characterised in that**
the second bearing bush (162) has a radial collar (163) which is provided between the second arm (123) and the securing disc (159) of the blind rivet (151).

8. Articulation device according to any one of Claims 5 to 7,
**characterised in that**
the bearing bushes (160 and 162) have substantially the same dimensions.

9. Articulation device according to one or more of Claims 5 to 8,
**characterised in that**
the bearing bushes (160 and 162) are produced from plastics material, metal or the like.

## Revendications

1. Dispositif d'articulation entre les bielles d'une timonerie de système de toit escamotable pour un véhicule de tourisme, pouvant être déplacé d'une position fermée recouvrant un habitacle dans une position ouverte rangée dans un espace arrière et vice versa, les bielles étant maintenues en place au moyen d'un dispositif à rivet comprenant un rivet aveugle (151) et une tige de rivet traversant les alésages des bielles, **caractérisé en ce qu'**une première bielle (122) comporte un manchon de palier (156) pour l'essentiel cylindrique avec un alésage, le manchon de palier s'étendant à travers un alésage de palier (124) d'une deuxième bielle (123), le rivet aveugle (151) butant avec un col (157) cylindrique de douille de rivet (158) contre une butée de la deuxième bielle, via au moins un disque de fixation (159), et une tête de mandrin (152) du rivet aveugle étant ramenée contre une butée de tige (154) dans l'alésage (155) du manchon de palier (156).

2. Dispositif d'articulation selon la revendication 1, **caractérisé en ce que** la première bielle (122) est réalisée sous la forme d'une pièce brute de fonderie et que le manchon de palier (156) est fabriqué au cours d'une même coulée avec la bielle (122).

3. Dispositif d'articulation selon les revendications 1 ou 2, **caractérisé en ce que** la tête de mandrin (152) du rivet aveugle s'appuie, au-delà d'un élargissement radial (153) de douille de rivet (158), contre la butée de tige (154) dans un alésage (155) échelonné du manchon de palier (156).

4. Dispositif d'articulation selon l'une quelconque des revendications précédentes ou plusieurs d'entre elles, **caractérisé en ce que** le disque de fixation (159), le manchon de palier et la butée de tige (154) sont réalisés dans l'alésage du manchon de palier (156) de façon à ce que la première bielle (122) et la deuxième bielle (123) puissent être réglées l'une par rapport à l'autre suivant un mouvement relatif ciblé.

5. Dispositif d'articulation selon l'une quelconque des revendications précédentes ou plusieurs d'entre elles, caractérisé en ce des première et deuxième douilles de palier (160 et 162) sont prévues entre le manchon de palier (156) de la première bielle et l'alésage de palier (124) de la deuxième bielle (123).

6. Dispositif d'articulation selon la revendication 5, **caractérisé en ce que** la première douille de palier (160) possède un col (161) radial prévu entre la première bielle (122) et la deuxième bielle (123).

7. Dispositif d'articulation selon la revendication 5 ou 6, **caractérisé en ce que** la deuxième douille de palier (162) possède un col (163) radial prévu entre la deuxième bielle (123) et le disque de fixation (159) du rivet aveugle (151).

8. Dispositif d'articulation selon l'une quelconque des revendications 5 à 7, **caractérisé en ce que** les douilles de palier (160 et 162) présentent pour l'essentiel les mêmes dimensions.

9. Dispositif d'articulation selon l'une quelconque des revendications 5 à 8 ou plusieurs d'entre elles, **caractérisé en ce que** les douilles de palier (160 et 162) sont fabriquées en matière plastique, en métal ou leur équivalent.
